# EUROPÄISCHE PATENTANMELDUNG

(11) **EP 0 924 834 A2**
(43) Veröffentlichungstag der Anmeldung: **23.06.1999**
(21) Anmeldenummer: 98122637.6
(22) Anmeldetag: 27.11.1998
(51) Int. Cl.: H02J 7/00

(54) **Spannungsversorgungsvorrichtung, insbesondere für ein Funktelefon in einem Kraftfahrzeug**

(30) Priorität: 22.12.1997 DE 19757362
(71) Anmelder: NOKIA MOBILE PHONES LTD., 02150 Espoo (FI)
(72) Erfinder: Hedrich, Jens, 44789 Bochum (DE)
(74) Vertreter: Urner, Peter, Dipl.-Phys.

(57) **Zusammenfassung**

Die Erfindung betrifft eine Spannungsversorgungsvorrichtung, insbesondere für ein Funktelefon in einem Kraftfahrzeug mit einer Hauptspannungsquelle (10), die mit einem Eingang (12) einer Spannungsanpassungsschaltung (13) verbunden ist, die zumindest eine Versorgungsspannung (U₁₂, U₅) für das Funktelefon (22) aus der an ihrem Eingang anliegenden Spannung (U_{B}, U_{N}) ableitet, und einer Hilfsspannungsquelle (26), die über einen steuerbaren Schalter (27) mit dem Eingang (12) der Spannungsanpassungsschaltung (13) verbindbar ist. Um beim Ausfall der Hauptspannungsquelle (10) einen ununterbrochenen Betrieb des Funktelefons (22) zu gewährleisten ist eine Spannungsüberwachungsschaltung (15) vorgesehen, der ein der Spannung (U_{B}) der Hauptspannungsquelle entsprechendes Spannungssignals zugeführt ist und die ein Schaltsteuersignal liefert, um bei Ausfall der Hauptspannungsquelle (10) im Notfall die Hilfsspannungsquelle (26) mit dem Eingang (12) der Spannungsanpassungsschaltung (13) zu verbinden.

## Beschreibung

Die Erfindung betrifft eine Spannungsversorgungsvorrichtung, insbesondere für ein Funktelefon in einem Kraftfahrzeug.

Ein Funktelefon, das in einem Kraftfahrzeug fest installiert ist, wird üblicherweise vom Bordnetz mit Energie versorgt. Es ist also so an das Bordnetz angeschlossen, daß der Betriebsstrom für das Funktelefon je nach dem Betriebszustand des Bordnetzes von der Kraftfahrzeugbatterie oder vom Generator geliefert wird. Dabei werden die Versorgungsspannung oder Versorgungsspannungen für das Funktelefon, also für den Sende-Hochfrequenzverstärker und die übrige Telefonelektronik einem entsprechenden Netzgerät bzw. einer Spannungsanpassungsschaltung entnommen, an der die Bordnetzspannung von etwa 10 V bis 16 V bei einer Nennspannung von 12 V anliegt.

Wird die Verbindung zwischen dem Funktelefon und dem Bordnetz unterbrochen oder wird die Kraftfahrzeugbatterie vom Bordnetz getrennt, so fällt damit die Spannungsversorgung für das Funktelefon aus und ein Telefonieren ist nicht mehr möglich

Insbesondere wenn das Bordnetz infolge eines Unfalls ausfällt, bei dem die Fahrzeugbatterie abgerissen oder zerstört wird, ist es wünschenswert, wenn das Funktelefon zumindest noch für eine gewisse Zelt betriebsbereit ist, um einen Notruf zu tätigen.

Davon ausgehend liegt der Erfindung die Aufgabe zugrunde, eine Spannungsversorgungsvorrichtung für ein Funktelefon, insbesondere in einem Kraftfahrzeug, bereitzustellen, die es ermöglicht, auch bei Ausfall einer Hauptspannungsquelle zumindest für eine gewisse Zeit weiter telefonieren zu können.

Diese Aufgabe wird durch die Spannungsversorgungsvorrichtung nach Anspruch 1 gelöst.

Erfindungsgemäß sind also bei einer Spannungsversorgungsvorrichtung, insbesondere bei einer Spannungsversorgungsvorrichtung für ein Funktelefon eine Haupt- und eine Hilfsspannungsquelle vorgesehen, wobei die Hilfsspannungsquelle während des normalen Betriebs mittels eines Schalters von der übrigen Schaltung getrennt ist, so daß sie keinen Beitrag zur Spannungsversorgung leistet. Um beim Ausfall der Hauptspannungsquelle einen ununterbrochenen Betrieb des Funktelefons zu gewährleisten, ist eine Spannungsüberwachungsschaltung vorgesehen, die die von der Hauptspannungsquelle gelieferte Spannung überwacht und bei deren Ausfall, also bei deren Absinken unter einen vorgegebenen Wert bewirkt, daß die Hilfsspannungsquelle zur Spannungsversorgung angeschlossen wird.

Besonders vorteilhaft ist es dabei, wenn die Spannungsanpassungsschaltung einen ersten Spannungskonverter, der eine erste Versorgungsspannung an seinem Ausgang ausgibt, und einen zweiten Spannungskonverter umfaßt, der eine zweite Versorgungsspannung liefert, die kleiner als die erste Versorgungsspannung ist, wobei zur Vereinfachung der Schaltung der Ausgang des ersten Spannungskonverters mit dem Eingang des zweiten Spannungskonverters verbunden ist.

Erfindungsgemäß wird also die von der Haupt- oder ggf. die von der Hilfsspannungsquelle geliefert Spannung verwendet, um daraus zunächst eine erste, relativ hohe Versorgungsspannung abzuleiten, die insbesondere zur Versorgung des Sende-Hochfrequenzverstärkers dient und aus der vorzugsweise eine zweite, relativ niedrige Versorgungsspannung für die übrige Telefonelektronik abgeleitet wird.

Bei einer Weiterbildung der Erfindung ist vorzugsweise vorgesehen, daß der erste Spannungskonverter neben einer Filterschaltung einen Schaltkreis zur Spannungserhöhung aufweist. Um dabei insbesondere für die für den Notfall gedachte Hilfsspannungsquelle auch Batterien mit relativ niedriger Ausgangsspannung verwenden zu können, ist die Hilfsspannungsquelle über den steuerbaren Schalter mit dem Eingang der Spannungsanpassungsschaltung verbindbar. Hierdurch wird es also ermöglicht, daß auch bei der Verwendung der erfindungsgemäßen Spannungsversorgungsvorrichtung in einem Kraftfahrzeug mit einem Bordnetz mit einer Nennspannung von 12 V als Hilfsspannungsquelle eine Batterie und vorzugsweise eine nicht wiederaufladbare Primärzelle vorgesehen werden kann, deren Ausgangsspannung beispielsweise 5 V beträgt.

Die Verwendung von Primärzellen hat den Vorteil, daß sie eine hohe Energiedichte aufweisen, also wenig Platz beanspruchen und dabei im Vergleich mit einer Fahrzeugbatterie, üblicherweise einem Bleiakkumulator, mechanisch sehr robust sind, so daß sie auch im Falle eines Notfalls, beispielsweise im Falle eines gefährlichen Fahrzeugaufpralls bei einem Unfall, nicht beschädigt werden und somit eine hohe Betriebszuverlässigkeit aufweisen. Darüber hinaus besitzen Primärzellen, wie beispielsweise LiMnO₂-Batterien, eine geringe Selbstentladung, so daß sie auch über Jahre hinweg einsatzbereit bleiben.

Gemäß einer anderen Ausgestaltung der Erfindung kann zweckmäßigerweise auch vorgesehen sein, daß die Hilfsspannungsquelle über den steuerbaren Schalter mit einem Eingang des zweiten Spannungskonverters der Spannungsanpassungsschaltung verbindbar ist. Diese Ausgestaltung ist besonders zweckmäßig, wenn als Hilfsspannungsquelle eine Notfallbatterie verwendet wird, die eine relativ hohe Spannung, beispielsweise eine Leerlaufspannung von 18 V liefert, da die Hilfsspannungsquelle bei dieser Anordnung im Notfallbetrieb nicht zusätzlich durch den ersten Spannungskonverter belastet wird.

Um auch während des Umschaltens von der Hauptspannungsquelle auf die Hilfsspannungsquelle, und insbesondere auf eine Hilfsspannungsquelle mit niedrigerer Spannung als die der Hauptspannungsquelle, einen kontinuierlichen Betrieb des Funktelefons sicherzustellen, ist vorgesehen, daß der Schaltkreis zur Spannungserhöhung bei eingeschaltetem Funktelefon oder bei eingeschalteter Zündung in Abhängigkeit von der Spannung der Hauptspannungsquelle steuerbar ist. Auf diese Weise läßt sich erreichen, daß der Schaltkreis zur Spannungserhöhung bereits vor dem Einschalten der Hilfsspannungsquelle aktiviert wird, während die Hauptspannungsquelle noch eine Spannung liefert, deren Wert jedoch niedriger ist als der Minimalwert der ersten Versorgungsspannung.

Ein Absinken der von der Hauptspannungsquelle gelieferten Spannung tritt beispielsweise auch dann auf, wenn die Hauptspannungsquelle zerstört oder zumindest vom Bordnetz und damit auch vom Eingang der Spannungsanpassungsschaltung getrennt wird. Der Schaltkreis zur Spannungserhöhung, der beim Betrieb des Funktelefons mittels der Hilfsspannungsquelle erforderlich ist, verhindert eine Unterbrechung der Spannungsversorgung für das Funktelefon.

Besonders zuverlässig arbeitet die Spannungsversorgungsvorrichtung, wenn der Schaltkreis zur Spannungserhöhung einen mit dem Ausgang des ersten Spannungskonverters verbundenen Regeleingang aufweist, um die Versorgungsspannung unabhängig von der am Eingang anliegenden Spannung auf einem stabilisierten Wert zu halten.

Um beim Einsatz der erfindungsgemäßen Spannungsversorgungsvorrichtung für ein Funktelefon in einem Kraftfahrzeug sicherzustellen, daß die Telefonelektronik des Funktelefons ohne Hochfrequenzverstärker ständig mit Spannung versorgt wird, ohne die angeschlossenen Spannungsquellen unnötig zu belasten, ist vorgesehen, daß der zweite Spannungskonverter einen ersten, ständig arbeitenden Schaltkreis zur Spannungserniedrlgung und parallel dazu einen zweiten Schaltkreis zur Spannungserniedrigung umfaßt, der ein- und ausschaltbar ist, wobei der erste Schaltkreis der Spannungserniedrigung ein Linearregler ist und der zweite Schaltkreis zur Spannungserniedrigung ein Gleichspannungs-Gleichspannungs-Wandler ist, der immer dann eingeschaltet ist, wenn die Zündung und/oder das Funktelefon eingeschaltet sind.

Für den Fall, daß also die Zündung und das Funktelefon ausgeschaltet sind, erfolgt die Spannungsversorgung allein über einen vorzugsweise als integrierte Transistorschaltung ausgelegten Linearregler, während bei eingeschaltetem Funktelefon und / oder bei eingeschalteter Zündung die Spannungsversorgung für die Telefonelektronik durch einen Gleichspannungs-Gleichspannungs-Wandler sichergestellt wird, der auch bei einer erhöhten Energieentnahme eine geringe Verlustleistung besitzt und eine konstante Versorgungsspannung für die Telefonelektronik gewährleistet.

Besonders vorteilhaft läßt sich die nahtlose Umschaltung von der Haupt-auf die Hilfsspannungsquelle realisieren, wenn die Spannungsüberwachungsschaltung einen ersten und zweiten Vergleicherkreis aufweist, die ein der Spannung der Hauptspannungsquelle entsprechendes Spannungssignal mit einem Referenzspannungssignal vergleichen, wobei der erste Vergleicherkreis ein Einschaltsignal für einen Schaltkreis zur Spannungserhöhung in einem ersten Spannungskonverter der Spannungsanpassungsschaltungliefert, wenn die Spannung der Hauptspannungsquelle unter einen ersten Wert absinkt, und der zweite Vergleicherkreis das Schaltersteuersignal liefert, wenn die Spannung der Hauptspannungsquelle unter einen zweiten Wert fällt.

Um dabei sicherzustellen, daß die Hilfsspannungsquelle nicht jedesmal eingeschaltet wird, wenn die von der Fahrzeugbatterie gelieferte Spannung beispielsweise beim Starten des Motors kurzfristig unter einen vorgegebenen Wert absinkt, ist vorgesehen, daß der zweite Vergleicherkreis das Schaltersteuersignal erst ausgibt, wenn die Spannung unter eine Mindestspannung, vorzugsweise unter die kleinste beim Starten des Fahrzeugmotors zu erwartende Spannung absinkt.

Um darüber hinaus zu vermeiden, daß die Hilfsspannungsquelle aktiviert wird, wenn beispielsweise bei der Wartung in der Werkstatt die Fahrzeugbatterie ausgebaut wird, ist vorgesehen, daß das Schaltersteuersignal vom zweiten Vergleicherkreis über eine Torschaltung ausgegeben wird, die normalerweise die Weiterleitung des Schaltersteuersignals freigibt und die insbesondere für Wartungszwecke mittels eines eingebbaren Signals sperrbar ist. Somit läßt sich ein Einschalten der Hilfsspannungsquelle, das diese unnötig belasten würde, sicher verhindern, wenn die Fahrzeugbatterie für Servicezwecke nicht angeschlossen ist.

Um die Belastung der jeweils angeschlossenen Spannungsquelle weiter zu verringern, ist vorgesehen, daß das Einschaltsignal vom ersten Vergleicherkreis über eine weitere Torschaltung ausgebbar ist, die nur dann die Welterleitung des Einschaltsignals ermöglicht, wenn die Zündung und/oder das Funktelefon eingeschaltet sind.

Um sicherzustellen, daß während eines Unfalls die Verbindung zwischen der Hilfsspannungsquelle und dem Funktelefon nicht unterbrochen wird, ist vorgesehen, daß die Hilfsspannungsquelle zusammen mit der Spannungsanpassungsschaltung und der Spannungsüberwachungsschaltung in einem Gehäuse mit dem Funktelefon untergebracht ist. Auf diese Weise läßt sich mit hoher Wahrscheinlichkeit sicherstellen, daß auch nach einem schweren Unfall des Fahrzeugs das Funktelefon im Umfang der in der Hilfsspannungsquelle gespeicherten Energie noch für eine gewisse Zeit betriebsbereit ist, so daß von den Fahrzeuginsassen oder auch von einer hierfür im Fahrzeug vorgesehenen Notrufautomatik Rettungskräfte mittels eines Notrufs herbeigerufen werden können.

Die Erfindungwird im folgenden beispielsweise anhand der Zeichnung näher erläutert. In dieser zeigt:
**Figur 1** ein vereinfachtes, schematisches Blockschaltbild einer Spannungsversorgungsvorrichtung für ein Funktelefon,
**Figur 2** ein vereinfachtes, schematisches Blockschaltbild einer Spannungsversorgungsvorrichtung für ein Funktelefon gemäß einer weiteren Ausgestaltung der Erfindung, und
**Figur 3** ein schematisches Schaltbild der Spannungsversorgungsvorrichtung nach Figur 1 oder 2, wobei die einzelnen Schaltungsblöcke mehr im einzelnen dargestellt sind.

In den verschiedenen Figuren der Zeichnung sind einander entsprechende Schaltungsteile und Bauelemente mit gleichen Bezugszeichen versehen.

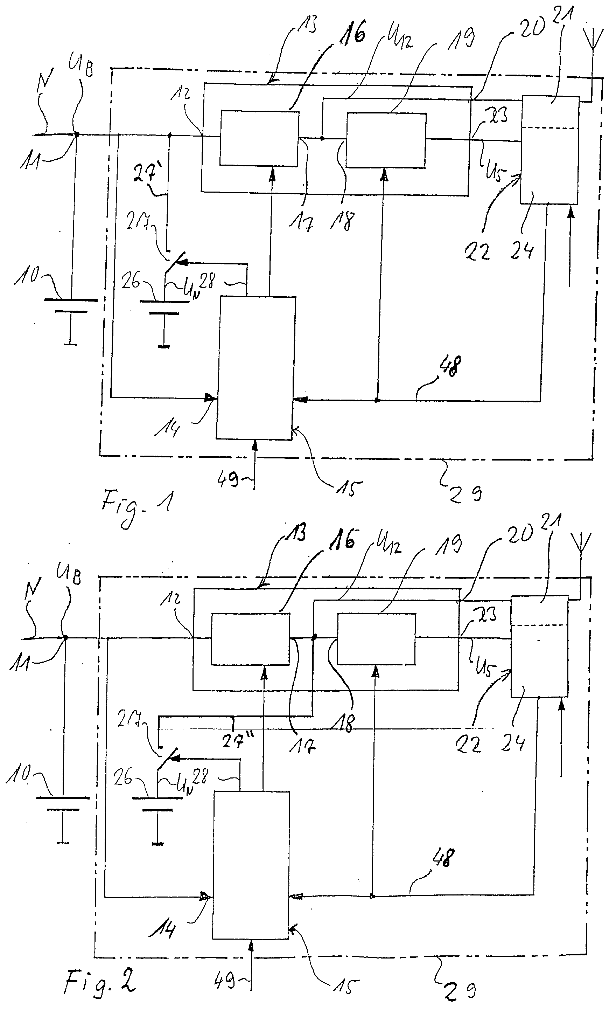

Jede der in Figur 1 und 2 gezeigten Spannungsversorgungsvorrichtungen für ein Funktelefon in einem Kraftfahrzeug umfaßt als Hauptspannungsquelle eine Fahrzeugbatterie 10, insbesondere die Starterbatterie des Bordnetzes N, das mit einer Anschlußklemme 11 der Fahrzeugbatterie 10 verbunden ist. Die an der Anschlußklemme 11 anliegende, vom Generator des Bordnetzes oder der Fahrzeugbatterie 10 gelieferte Spannung U_{B} wird einerseits an einen Eingang 12 einer Spannungsanpassungsschaltung 13 und andererseits an einen ersten Eingang 14 einer Spannungsüberwachungsschaltung 15 angelegt.

Die Spannungsanpassungsschaltung 13 weist einen mit dem Eingang 12 verbundenen ersten Spannungskonverter 16 zur Spannungserhöhung auf, dessen Ausgang 17 mit einem Eingang 18 eines zweiten Spannungskonverters 19 zur Spannungserniedrigung und mit einem ersten Ausgang 20 der Spannungsanspassungsschaltung 13 verbunden ist. Der erste Spannungskonverter 16 liefert eine erste Versorgungsspannung U₁₂, die beispielsweise 12 V beträgt, und die als Versorgungsspannung für einen Sende-Hochfrequenzverstärker 21 eines Funktelefons 22 dient.

Der zweite Spannungskonverter 19 leitet aus der ersten Versorgungsspannung U₁₂ eine zweite Versorgungsspannung U₅ ab, die über einen zweiten Ausgang 23 der Spannungsanpassungsschaltung 13 der übrigen Telefonelektronik 24 zugeführt wird. Die zweite Versorgungsspannung U₅ beträgt dabei beispielsweise 3 V oder 5 V. Der Wert der Versorgungsspannung U₅ ist dabei von der eingesetzten Schaltungstechnik abhängig. Für den Fall, daß die Telefonelektronik 24 eine Versorgungsspannungvon 3 V benötigt, während die Spannungsanpassungsschaltung 13 am zweiten Ausgang 23 eine zweite Versorgungsspannung U₅ von 5 V liefert, kann in der Telefonelektronik 24 eine weitere Spannungsverringerungsschaltung vorgesehen sein.

Neben der als Hauptspannungsquelle dienenden Fahrzeugbatterie 10 ist als Hilfsspannungsquelle eine Notfallbatterie 26 vorgesehen, die über einen steuerbaren Schalter 27 mit der Spannungsanpassungsschaltung 13 verbindbar ist, so daß die von der Notfallbatterie 26 gelieferte Spannung U_{N} an die Spannungsanpassungsschaltung 13 anlegbar ist. Der steuerbare Schalter 27 wird von einem Schaltersteuersignal in seiner Ein- und Ausschaltfunktion gesteuert, das über einen ersten Ausgang 28 der Spannungsüberwachungsschaltung 15 von dieser ausgegeben wird, wenn die Spannung U_{B} unter einen vorgegebenen Wert, beispielsweise unter 4 V oder unter 5 V absinkt, so daß die Spannungsversorgung für das Funktelefon 22 von der Notfallbatterie 26 übernommen wird.

Wie in Figur 1 dargestellt, ist die Notfallbatterie 26 über den Schalter 27 und eine Leitung 27' mit demselben Eingang 12 der Spannungsanpassungsschaltung 13 verbindbar, an den auch die Fahrzeugbatterie 10 angeschlossen ist. Diese Schaltung läßt sich insbesondere für Notfallbatterien 26 verwenden, deren Ausgangsspannung kleiner als die Nennspannung des Bordnetzes ist.

Wird andererseits eine Notfallbatterie 26 mit relativ hoher Spannung, beispielsweise mit einer Leerlaufspannung von 18 V verwendet, die bei Belastung allenfalls auf 10 V abfällt, so kann die Notfallbatterie 26 auch über den Schalter 27 mit einer Leitung 27'' verbunden werden, die direkt an den Eingang 18 des zweiten Spannungskonverters 19 geführt ist, wie in Figur 2 dargestellt.

Die erfindungsgemäße Spannungsversorgungsvorrichtung ermöglicht es somit, das Funktelefon 22 auch im Falle eines Unfalls weiter zu benutzen, bei dem die Verbindung zwischen Funktelefon 22 und Fahrzeugbatterie 10 oder Bordnetz N unterbrochen wird. Damit wird es den Insassen eines in einen Unfall verwickelten Kraftfahrzeugs oder einer Notrufautomatik ermöglicht, einen Notruf abzusetzen. Um für diesen Fall sicherzustellen, daß die Verbindung zwischen der Notfallbatterie 26 und dem Funktelefon 22 nicht auch noch unterbrochen wird, ist die Notfallbatterie 26 gemeinsam mit der Spannungsüberwachungsschaltung 15 und der Spannungsanpassungsschaltung 13 in einem das Funktelefon 22 aufnehmenden Gehäuse 29 untergebracht.

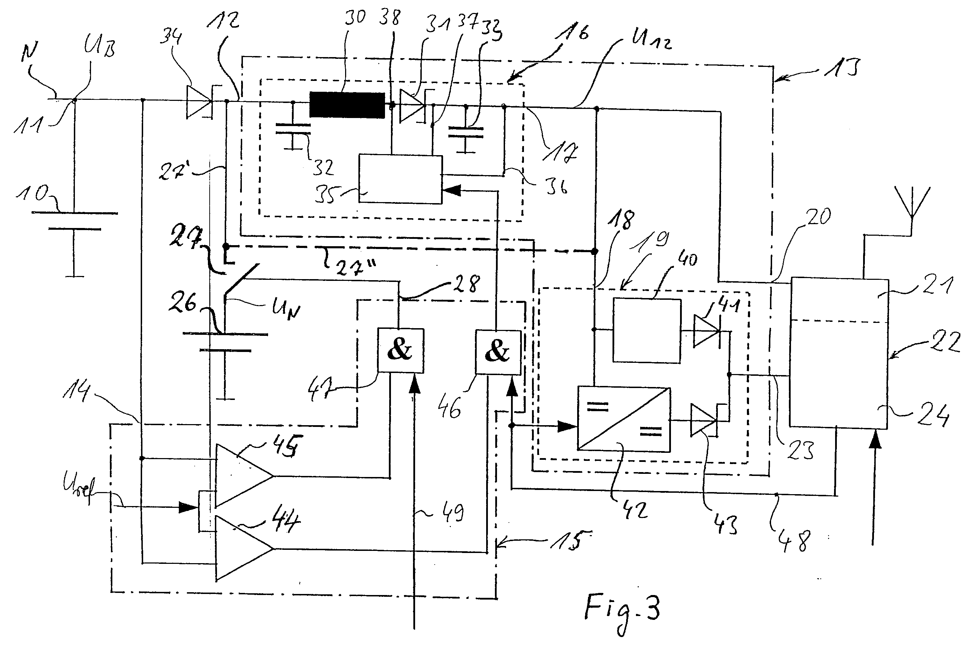

Der erste Spannungskonverter 16 weist, wie in Figur 3 gezeigt, zwischen dem Eingang 12 und seinem Ausgang 17 eine Reihenschaltung aus einer Spule 30 und einer beispielsweise als Schottky-Diode ausgebildeten Diode 31 auf. Um eine Filterfunktion des ersten Spannungskonverters 16 zu ermöglichen, ist sein Eingang 12 und sein Ausgang 17 jeweils über einen Kondensator 32, 33 mit Masse verbunden. Die Spule 30 bildet somit zusammen mit den Kondensatoren 32, 33 einen Tiefpassfilter der gleichzeitig die am Ausgang 17 anliegende erste Versorgungsspannung U₁₂ glättet und stabilisiert.

Die Filterwirkung des aus Spule 30 und Kondensatoren 32, 33 gebildeten Tiefpaßfilters verhindert dabei auch umgekehrt zusammen mit den Dioden 31, 34, daß Störimpulse und Spannungsspitzen vom Sende-Hochfrequenzverstärker 21 in das Bordnetz N gelangen können. Außerdem dienen die Spule 30 und die Kondensatoren 32, 33 als Energiespeicher, die beim Umschalten der Spannungsversorgung auf die Notfallbatterie 26 die ununterbrochene Aufrechterhaltung der Versorgungsspannung U₁₂ ermöglichen bzw. unterstützen.

Um in dem Fall, daß die Spannung U_{B} der Fahrzeugbatterie 10, die über eine Diode 34 an den Eingang 12 der Spannungsanpassungsschaltung 13 angelegt ist, unter einen ersten vorgegebenen Wert, z. B. 10 V absinkt, sicherzustellen, daß die erste Versorgungsspannung U₁₂ am Ausgang des Spannungskonverters 16 aufbeispielsweise 12 V gehalten wird, wirkt die Spule 30 mit einem Schaltregler 35 zusammen, dem über eine Rückkopplungsleitung 36 die erste Versorgungsspannung U₁₂ am Ausgang des ersten Spannungskonverters 16 zugeführt wird. Zur Spannungsversorgung ist der Schaltregler 35 mit dem Kondensator 33 über eine Leitung 37 verbunden. Ein Ausgang 38 des Schaltreglers 35 ist mit dem Verbindungspunkt zwischen Spule 30 und Diode 31 verbunden, um den Verbindungspunkt zwischen Spule 30 und Diode 31 während des Spannungserhöhungsbetriebs periodisch auf Masse zu ziehen.

Der Betrieb des Schaltreglers 35 bzw. des aus Spule 30 und Schaltregler 35 aufgebauten Schaltkreises zur Spannungserhöhung wird in Abhängigkeit von der Spannung U_{B} der Kraftfahrzeugbatterie 10 in noch näher zubeschreibender Weise von der Spannungsüberwachungsschaltung 15 gesteuert.

Der zweite Spannungskonverter 19, der zur Ableitung einer zweiten, geringeren Versorgungsspannung U₅ aus der ersten Versorgungsspannung U₁₂ dient, weist einen Linearregler 40 auf, dessen Eingang mit dem Ein gang 18 des Spannungskonverters 19 und dessen Ausgangüber eine Diode 41 mit dem zweiten Ausgang 23 der Spannungsanpassungsschaltung 13 verbunden ist. Der Linearregler 40 ist hierbei vorzugsweise eine integrierte Transistorschaltung. Parallel zum Linearregler 40 ist zwischen den Eingang 18 und den Ausgang 23 ein Gleichspannungs-GleichspannungsWandler 42 geschaltet, der einen zweiten Schaltkreis zur Spannungserniedrigung bildet. Der Ausgang dieses Gleichspannungs-Gleichspannungs-Wandlers 42 ist über eine weitere Diode 43, insbesondere eine Schottky-Diode mit dem zweiten Ausgang 23 der Spannungsanpassungsschaltung 13 verbunden, so daß der Telefonelektronik 24 des Funktelefons 22 die zweite Versorgungsspannung U₅ entweder über den Linearregler 40 oder den Gleichspannungs-Gleichspannungs-Wandler 42 zugeführt wird.

Um den Schaltkreis 30, 35 zur Spannungserhöhung im ersten Spannungskonverter 16 und den steuerbaren Schalter 27 in Abhängigkeit von der Spannung U_{B} der Kraftfahrzeugbatterie 10 zu steuern, weist die Spannungsüberwachungsschaltung 15 einen ersten und einen zweiten Vergleichskreis 44, 45 auf, deren Ausgangssignale an ein erstes bzw. zweites, jeweils eine Torschaltung bildendes UND-Gatter 46, 47 angelegt ist. Die Vergleicherkreise 44, 45, an die als der Spannung U_{B} der Fahrzeugbatterie entsprechendes Spannungssignal die Spannung U_{B} selbst angelegt ist, vergleichen diese mit einer Referenzspannung U_{ref}, die an den jeweiligen anderen Eingängen der Vergleicherkreise anliegt.

Sobald die Spannung U_{B} unter einen ersten vorgegebenen Wert U₁₀ von beispielsweise 10 V absinkt gibt der erste Vergleicherkreis 44 ein Einschaltsignal aus, das über die Torschaltung 46 nur dann an den Schaltregler 35 des Schaltkreises 30, 35 zur Spannungserhöhung im ersten Spannungskonverter 16 weitergeleitet wird, wenn über eine Leitung 48 von der Telefonelektronik 24 ein Freigabesignal geliefert wird, das anzeigt, daß das Funktelefon 22 und/oder die Zündung des Kraftfahrzeugs eingeschaltet sind. Ist weder das Funktelefon 22 noch die Zündung des Kraftfahrzeugs eingeschaltet, so wird nur die zweite Versorgungsspannung U₁₂ benötigt, die jedoch kleiner ist, als der erste vorgegebene Spannungswert U₁₀ und die auch bei einer unter diesen Wert abfallenden Spannung U_{B} der Kraftfahrzeugbatterie über den ständig arbeitenden Linearregler 40 des zweiten Spannungskonverters 19 ohne weiteres bereitgestellt werden kann. Somit ist ein Betrieb des Schaltkreises 30, 35 zur Erhöhung der Spannung nicht erforderlich und wird mit Hilfe des gesperrten UND-Gatters 46 verhindert.

In entsprechender Weise wird der Gleichspannungs-GleichspannungsWandler 42 ebenfalls nur dann in Betrieb genommen, wenn das Funktelefon 22 oder die Zündung des Kraftfahrzeugs eingeschaltet sind. Ansonsten wird die zweite Versorgungsspannung U₅ allein vom Linearregler 40 bereitgestellt.

Sinkt beispielsweise durch Beschädigung der Fahrzeugbatterie 10 oder durch Unterbrechung der entsprechenden Leitungen die Spannung U_{B} unter einen zweiten vorgegebenen Wert, der vorzugsweise der kleinsten zu erwartenden Spannung beim Anlassen des Motors entspricht und der beispielsweise 4 V oder 5 V betragen kann, so wird dieses Absinken der Spannung U_{B} vom zweiten Vergleicherkreis 45 erfaßt, der ein entsprechendes Schaltersteuersignal über den Ausgang 28 an das zugeordnete UND-Gatter 47 abgibt. Normalerweise liegt über die Leitung 49 ein Freigabesignal am UND-Gatter 47 an, so daß der steuerbare Schalter 27 geschlossen wird, was zur Folge hat, daß die Spannungsversorgung für das Funktelefon 22 beim Wegfall der Spannung U_{B} nahtlos auf die Notfallbatterie 26 umgeschaltet wird.

Um im Fall der Spannungsversorgungsvorrichtung nach Figur 1 zu verhindern, daß Strom aus der Notfallbatterie 26 in das Bordnetz N abfließt, sperrt die Diode 34 den Stromfluß von der Notfallbatterie 26 zum Bordnetz N und zur Fahrzeugbatterie 10.

Ist es jedoch erforderlich, für Wartungsarbeiten am Kraftfahrzeug in der Werkstatt die Batterie 10 abzuklemmen, so ist für diesen Fall vorgesehen, daß das über die Leitung 49 am UND-Gatter 47 anliegende Freigabesignal abgeschaltet werden kann, um eine unnötige, die Lebensdauer der Notfallbatterie 26 beträchtlich verkürzende Spannungsversorgung durch die Notfallbatterie 26 zu verhindern.

Die erfindungsgemäße Spannungsversorgungsvorrichtung für ein Funktelefon 22 ermöglicht vier verschiedene Betriebsarten.

Während des Normalbetriebs, wenn also die Spannung U_{B} der Kraftfahrzeugbatterie 10 bzw. die vom Generator des Bordnetzes N an der Anschlußklemme 11 bereitgestellte Ausgangsspannung im Bereich zwischen 10 V und 16 V, insbesondere bei üblicherweise etwa 13,5 V liegt, ist der steuerbare Schalter 27 geöffnet, während die Spannungsüberwachungsschaltung den Schaltkreis zur Spannungserhöhung im ersten Spannungskonverter 16 inaktiv hält. Der Spannungskonverter 16 liefert somit aufgrund seiner Filterfunktion eine geglättete und stabilisierte erste VersorgungsSpannung U₁₂, die dem Hochfrequenzverstärker 21 des Funktelefons 22 und dem zweiten Spannungskonverter 19 zugeführt wird, der daraus die zweite Versorgungsspannung U₅ für die übrige Telefonelektronik 24 ableitet.

Sinkt die Spannung U_{B} der Fahrzeugbatterie 10 unter einen Wert U₁₀ von beispielsweise 10 V oder wie hier angenommen 11 V, so wird dieses Absinken vom ersten Vergleicherkreis 44 der Spannungsüberwachungsschaltung 15 erfaßt, die daraufhin ein Einschaltsignal für den Schaltregler 35 bzw. der Schaltkreis 30, 35 der Spannungserhöhung über das bei eingeschalteter Zündung offene UND-Gatter 46 liefert. Bei diesem Betrieb wird die Spannung am Ausgang 17 des Spannungskonverters 16 mit Hilfe der Spule und des Schaltreglers 35 auf dem erforderlichen Wert, beispielsweise 12 V, gehalten. Die Ableitung der zweiten Versorgungsspannung U₅ aus der ersten Versorgungsspannung U₁₂ erfolgt durch den Spannungskonverter 19 in der gleichen Weise wie beim Normalbetrieb.

Wird die Verbindung zur Fahrzeugbatterie 10 oder zum Bordnetz N unterbrochen, so sinkt die Spannung U_{B} unter den zweiten vorgegebenen Wert von beispielsweise 4 oder 5 V, was von dem zweiten Vergleicherkreis 45 der Spannungsüberwachungsschaltung 15 erfaßt wird. Die Spannungsüberwachungsschaltung 15 liefert dann über den Ausgang 28 in beschriebener Weise das Schaltersteuersignal für den Schalter 27, der daraufhin schließt und die Notfallbatterie 26 zur Spannungsversorgung des Funktelefons 22 anschließt, so daß die Spannung U_{N} als Versorgungsspannung für die Spannungsanpassungsschaltung 13 an deren Eingang 12 (Figur 1) oder am Eingang 18 des zweiten Spannungskonverters (Figur 2) anliegt.

Liegt die Spannung U_{N}, wie in Figur 1 dargestellt, am Eingang 12 der Spannungsanpassungsschaltung 13 an, so wird wie bei der zweiten Betriebsart jetzt durch den Schaltkreis aus Spule 30 und Schaltregler 35 die Eingangsspannung von beispielsweise 5 V auf den für die Versorgung des Hochfrequenzverstärkers 21 erforderliche Spannung von beispielsweise 12 V erhöht. Bei Verwendung einer Notfallbatterie 26 mit einer relativ hohen Spannung U_{N} kann jedoch auch, wie in Figur 2 gezeigt, die Notfallbatterie 26 unmittelbar an den Eingang 18 des zweiten Spannungskonverters 19 angelegt werden. Da der Eingang 18 mit dem Ausgang 17 des ersten Spannungskonverters und damit gleichzeitig auch mit dem Ausgang 20 der Spannungsanpassungsschaltung 13 verbunden ist, wird hier die Spannung U_{N} sowohl als erste Versorgungsspannung U₁₂ als auch als Versorgungsspannung zum Ableiten der zweiten Versorgungsspannung U₅ mittels des zweiten Spannungskonverters 19 genutzt.

Für den Servicebetrieb in der Werkstatt wird das Freigabesignal auf der Leitung 49 abgeschaltet, so daß die Fahrzeugbatterie 10 ohne weiteres abgeklemmt oder ausgebaut werden kann ohne das die Notfallbatterie 26 eingeschaltet wird.

Die Erfindung wurde beispielsweise anhand einer Spannungsversorgungsvorrichtung für ein Funktelefon in einem Kraftfahrzeug mit einer Bordnetz-Nennspannung von 12 V beschrieben. Die einzelnen nur als Beispiel dienenden Spannungswerte können jedoch je nach vorliegender Haupt-Versorgungsspannung und Schaltungstechnik unterschiedlich sein und daher entsprechend geändert werden.

Neben der beschriebenen Verwendung der erfindungsgemäßen Spannungsvorrichtung für ein Funktelefon in einem Kraftfahrzeug ist es auch möglich, die erfindungsgemäße Spannungsvorrichtung für andere sicherheitsrelevante Einrichtungen einzusetzen, die auch nach Ausfall einer Hauptspannungsquelle mit relativ hoher Spannung für eine gewisse Zelt betriebsbereit zu halten sind. Soll dabei eine Hilfsspannungsquelle mit niedriger Spannung verwendet werden, so wird diese zweckmäßigerweise mit demselben Eingang verbunden, wie die Hauptspannungsquelle.

## Patentansprüche

1. Spannungsversorgungsvorrichtung, insbesondere für ein Funktelefon, in einem Kraftfahrzeug mit
- einer Hauptspannungsquelle (10), die mit einem Eingang (12) einer Spannungsanpassungsschaltung (13) verbunden ist, die zumindest eine Versorgungsspannung (U₁₂, U₅) aus der an ihrem Eingang anliegenden Spannung (U_{B}, U_{N}) ableitet,
- einer Hilfsspannungsquelle (26), die über einen steuerbaren Schalter (27) mit der Spannungsanpassungsschaltung (13) verbindbar ist, und
- einer Spannungsüberwachungsschaltung (15), der ein der Spannung (U_{B)} der Hauptspannungsquelle (10) entsprechendes Spannungs-signals zugeführt ist und die ein Schaltsteuersignal liefert, um bei Ausfall der Hauptspannungsquelle (10) im Notfall die Hilfsspannungsquelle (26) mit der Spannungsanpassungsschaltung (13) zu verbinden.

2. Spannungsversorgungsvorrichtung nach Anspruch 1, **dadurch gekennzeichnet,** daß die Spannungsanpassungsschaltung (13) einen ersten Spannungskonverter (16), der eine erste Versorgungsspannung (U₁₂) an seinem Ausgang (17) ausgibt, und einen zweiten Spannungskonverter (19) umfaßt, der eine zweite Versorgungsspannung (U₅) liefert, die kleiner als die erste Versorgungsspannung (U₁₂) ist.

3. Spannungsversorgungsvorrichtung nach Anspruch 2, **dadurch gekennzeichnet,** daß der Ausgang (17) des ersten Spannungskonverters (16) mit dem Eingang (18) des zweiten Spannungskonverters (19) verbunden ist.

4. Spannungsversorgungsvorrichtung nach Anspruch 2 oder 3, **dadurch gekennzeichnet,** daß der erste Spannungskonverter (16) eine Fil-terschaltung (30, 32, 33) und einen Schaltkreis zur Spannungserhöhung (30, 35) aufweist.

5. Spannungsversorgungsvorrichtung nach einem der Ansprüche 1 bis 4, **dadurch gekennzeichnet,** daß die Hilfsspannungsquelle (26) über den steuerbaren Schalter (27) mit dem Eingang (12) der Spannungsanpassungsschaltung (13) verbindbar ist.

6. Spannungsversorgungssvorichtung nach Anspruch 2, 3 oder 4, **dadurch gekennzeichnet,** daß die Hilfsspannungsquelle (26) über den steuerbaren Schalter (27) mit einem Eingang (18) des zweiten Spannungskonverters (19) der Spannungsanspassungsschaltung (13) verbindbar ist.

7. Spannungsversorgungsvorrichtung nach Anspruch 4, 5 oder 6, **dadurch gekennzeichnet,** daß der Schaltkreis (30, 35) zur Spannungserhöhung bei eingeschalteten Funktelefon (22) oder bei eingeschalteter Zündung in Abhängigkeit von der Spannung (U_{B}) der Hauptspannungsquelle (10) steuerbar ist.

8. Spannungsversorgungsvorrichtung nach einem der Ansprüche 4 bis 7, **dadurch gekennzeichnet,** daß der Schaltkreis (30, 35) zur Spannungserhöhung einen mit dem Ausgang (17) des ersten Spannungskonverters (16) verbundenen Regeleingang aufweist, um die Versorgungsspannung (U₁₂) unabhängig von der am Eingang anliegenden Spannung (U_{B}, U_{N}) auf einem stabilisierten Wert zu halten.

9. Spannungsversorgungsvorrichtung nach einem der Ansprüche 2 bis 8, **dadurch gekennzeichnet,** daß der zweite Spannungskonverter (19) einen ersten, ständig arbeitenden Schaltkreis (40) zur Spannungserniedrigung und parallel dazu einen zweiten Schaltkreis (42) zur Spannungserniedrigung umfaßt, der ein- und ausschaltbar ist.

10. Spannungsversorgungsvorrichtung nach Anspruch 9, **dadurch gekennzeichnet,** daß der erste Schaltkreis der Spannungserniedrigung ein Linearregler (40) ist.

11. Spannungsversorgungsvorrichtung nach Anspruch 9 oder 10, **dadurch gekennzeichnet,** daß der zweite Schaltkreis zur Spannungserniedrigung ein Gleichspannungs-Gleichspannungs-Wandler (42) ist, der immer dann eingeschaltet ist, wenn die Zündung und/oder das Funktelefon (22) eingeschaltet sind.

12. Spannungsversorgungsvorrichtung nach einem der vorstehenden Ansprüche, **dadurch gekennzeichnet,** daß die Spannungsüberwachungsschaltung (15) einen ersten und zweiten Vergleicherkreis (44, 45) aufweist, die ein der Spannung (U_{B}) der Hauptspannungsquelle (10) entsprechendes Spannungssignal mit einem Referenzspannungssignal (U_{ref}) vergleichen, wobei der erste Vergleicherkreis (44) ein Einschaltsignal für einen Schaltkreis (30, 35) zur Spannungserhöhung in einem ersten Spannungskonverter (16) der Spannungsanpassungsschaltung (13) liefert, wenn die Spannung (U_{B}) der Hauptspannungsquelle (10) unter einen ersten Wert (U₁₀) absinkt, und der zweite Vergleicherkreis (45) das Schaltersteuersignal liefert, wenn die Spannung (U_{B}) der Hauptspannungsquelle unter einen zweiten Wert (U₅) fällt.

13. Spannungsversorgungsvorrichtung nach Anspruch 12, **dadurch gekennzeichnet,** daß der zweite Vergleicherkreis (45) das Schaltersteuersignal erst ausgibt, wenn die Spannung unter eine Mindestspannung, vorzugsweise unter die kleinste beim Starten des Fahrzeugmotors zu erwartende Spannung absinkt.

14. Spannungsversorgungsvorrichtung nach Anspruch 12 oder 13, **dadurch gekennzeichnet,** daß das Schaltersteuersignal vom zweiten Vergleicherkreis (45) über eine Torschaltung (47) ausgegeben wird, die normalerweise die Weiterleitung des Schaltersteuersignals freigibt und die insbesondere für Wartungszwecke mittels eines eingebbaren Signals sperrbar ist.

15. Spannungsversorgungsvorrichtung nach Anspruch 12 bis 14, **dadurch gekennzeichnet,** daß das Einschaltsignal vom ersten Vergleicherkreis (44) über eine weitere Torschaltung (46) ausgebbar ist, die nur dann die Weiterleitung des Einschaltsignals ermöglicht, wenn die Zündung und/oder das Funktelefon (22) eingeschaltet sind.

16. Spannungsversorgungsvorrichtung nach einem der vorstehenden Ansprüche, **dadurch gekennzeichnet,** daß die Hilfsspannungsquelle (26) zusammen mit der Spannungsanpassungsschaltung (13) und der Spannungsüberwachungsschaltung (15) in einem Gehäuse (29) mit dem Funktelefon (22) untergebracht ist.

17. Spannungsversorgungsvorrichtung nach einem der vorstehenden Ansprüche, **dadurch gekennzeichnet,** daß als Hilfsspannungsquelle (26) eine Primärzelle vorgesehen ist.
